# EUROPÄISCHE PATENTANMELDUNG

(11) **EP 1 903 753 A1**
(43) Veröffentlichungstag der Anmeldung: **26.03.2008**
(21) Anmeldenummer: 06019893.4
(22) Anmeldetag: 22.09.2006
(51) Int. Cl.: H04L 29/12

(54) **Verfahren zur Erzeugung einer externen Internet-Protokoll-Adresse zur Verwendung als Zieladresse einer Reserve-External-Address-Nachricht**

(71) Anmelder: SIEMENS AKTIENGESELLSCHAFT, 80333 München (DE)
(72) Erfinder: Pashalidis, Andreas, Dr., 81669 München (DE)

(57) **Zusammenfassung**

Es wird ein Verfahren zur Erzeugung einer externen Internet-Protokoll (IP) -Adresse (DESTv) zur Verwendung als Zieladresse (DEST) einer Reserve-External-Address (REA) -Nachricht (REA-M) eines hinter einem mittels Network Address Translator/Firewall (NATFW) Next-Steps-In-Signaling (NSIS) Signaling Layer Protocol (NATFW NSLP) konfigurierbaren NATFW liegenden NSIS-Knotens (DR) beschrieben, welches die Verfahrensschritte:
- Auswahl mindestens eines Bits (b₁, b₂, b₃, ... , bₙ) aus dem maskierten Teil der IP-Adresse (IPA) des NSIS-Knotens (DR),
- Invertieren des ausgewählten Bits (b₁, b₂, b₃, ... , bₙ),
- Einfügen des invertierten Bits (b₁, b₂, b₃, ... , bₙ) an derjenigen Bit-Position (1, 2, 3, ... , n) in die Zieladresse (DEST), an der das ursprünglich ausgewählte Bit (b₁, b₂, b₃, ... , bₙ) in der IP-Adresse (IPA) des NSIS-Knotens (DR) stand,
- Auffüllen der verbleibenden Bit-Positionen (4, 5, 6, ... , n-1) der Zieladresse (DEST) mit den jeweils die Selben Bit-Positionen (4, 5, 6, ... n-1) einnehmenden Bits (b₄, b₅, b₆, ... , bₙ₋₁) der IP-Adresse (IPA) des NSIS-Knotens (DR)
umfasst.

## Beschreibung

Die Erfindung betrifft ein Verfahren zur Erzeugung einer externen Internet-Protokoll-Adresse zur Verwendung als Zieladresse einer Reserve-External-Address-Nachricht gemäß dem Oberbegriff des Anspruchs 1.

Durch technische Neuerungen, wie etwa Breitbandnetzwerke, sowie darauf aufbauende, neue Dienste, wie beispielsweise auf Voice-over-Internet-Protocol (VoIP) basierende Internettelephonie, die Übertragung von Videokonferenzen, Live-Streaming von Radio und Fernsehprogrammen, rückt das Internet neben seiner Funktion als Informationsmedium mehr und mehr auch als Übertragungsmedium für Echtzeit-Kommunikation in den Vordergrund.

Bei der Echtzeit-Kommunikation zwischen zwei oder mehreren Teilnehmern, aber auch bei anderen denkbaren, beispielsweise mittels Servern zentral gesteuerten Diensten, wie etwa einem Aktualisieren von Programmen, von Datenbeständen, dem Anpassen von Schutzprogrammen an neu bekannt gewordene Sicherheitsattacken, ist es notwendig, dass beide Teilnehmer einen Kontakt oder eine Kommunikation initiieren können.

Ist einer der Teilnehmer beispielsweise aus Sicherheits- oder anderen Gründen nicht direkt mit dem öffentlichen Internet verbunden, sondern befindet sich, wie beispielsweise bei lokalen Netzwerken üblich, mindestens eine Firewall und/oder mindestens ein Netzwerk-Adress-Umsetzer (Network-Address-Translator, NAT) zwischen öffentlichen Internet und Teilnehmer, so kann der Kontakt mit oder die Kommunikation zu diesem Teilnehmer nicht von außen, also vom öffentlichen Internet aus, initiiert werden.

Um die Initiierung einer Kommunikation oder eines Kontakts in dem oben geschilderten Fall auch von außen zu ermöglichen befinden sich NATs und Firewalls, sowie Kombinationen hiervon in der Entwicklung, nachfolgend unter dem Begriff Network-Address-Translator/Firewall (NATFW) zusammengefasst, welche über ein eigens dafür vorgesehenes Protokoll dynamisch konfigurierbar sind. Mit der Entwicklung einer Reihe von entsprechenden Standards beschäftigt sich die Next Steps In Signaling (NSIS) Arbeitsgruppe der Internet Engineering Task Force (IETF). Das Protokoll das die oben beschriebene dynamische Konfiguration ermöglicht ist unter dem Namen NATFW NSIS Signaling Layer Protocol (NATFW NSLP) bekannt.

Die Netzwerkknoten, die die von der NSIS Gruppe standardisierten Protokolle beherrschen, wie unter anderem auch das NATFW NSLP, werden auch als NSIS-Knoten bezeichnet. Dies kann sowohl NATFWs, Router, als auch Datensender bzw. -empfänger umfassen. Um beispielsweise eine Kommunikation, wie etwa eine VoIP-Session, von außen aus dem öffentlichen Internet mit einem in einem durch ein NATFW geschützten lokalen Netzwerk liegenden, in diesem Fall zunächst als Datenempfänger arbeitenden NSIS-Knoten initialisieren zu können, sieht das NATFW NSLP vor, dass der NSIS-Knoten eine bestimmte Nachricht, die so genannte Reservierung-Externer-Adresse (Reserve External Address; REA) Nachricht sendet. Diese Nachricht dient dazu, einen Zustand an einem so genannten Grenz- oder Edge-NATFW an der Grenze zwischen öffentlichem Internet und dem lokalen Netzwerk anzulegen. Dieser Zustand wird später benötigt um eine speziell hierfür vorgesehene Ausnahmeregel, auch Pinhole genannt, durch die eine Kontaktaufnahme oder Kommunikation von außen initiiert werden kann, im Edge-NATFW anzulegen. Hierzu muss aber sichergestellt sein, dass die REA-Nachricht das Edge-NATFW erreicht.

Um sicherzustellen, dass die REA-Nachricht das Edge-NATFW erreicht, muss der NSIS-Knoten, der die REA-Nachricht sendet, eine aus Sicht des lokalen Netzwerks externe, gültige Internet-Protocol (IP) Adresse im Header der REA-Nachricht als Zieladresse angeben.

Ein Problem ergibt sich, wenn dem NSIS-Knoten keine externe IP-Adresse bekannt ist, die er als Zieladresse in der REA-Nachricht angeben kann.

Der Erfindung liegt daher die Aufgabe zugrunde, ein Verfahren anzugeben, welches dem NSIS-Knoten ermöglicht, eine externe IP-Adresse als Zieladresse für die REA-Nachricht anzugeben, so dass diese das Edge-NATFW mit hoher Wahrscheinlichkeit erreicht.

Diese Aufgabe wird durch ein Verfahren nach Anspruch 1 gelöst. Das erfindungsgemäße Verfahren zur Erzeugung einer externen IP-Adresse zur Verwendung als Zieladresse einer REA-Nachricht eines hinter eines mittels NATFW NSLP konfigurierbaren NATFW liegenden NSIS-Knotens umfasst die folgenden Verfahrensschritte:
- Auswahl mindestens eines Bits aus dem maskierten Teil der IP-Adresse des NSIS-Knotens,
- Invertieren des ausgewählten Bits,
- Einfügen des invertierten Bits an derjenigen Bit-Position in die Zieladresse der REA-Nachricht des NSIS-Knotens, an der das ursprünglich ausgewählte Bit in der IP-Adresse des NSIS-Knotens stand,
- Auffüllen der verbleibenden Bit-Positionen der Zieladresse mit den jeweils die Selben Bit-Positionen einnehmenden Bits der IP-Adresse des NSIS-Knotens.

Durch Invertierung des oder der ausgewählten Bits und Verwendung der jeweils auf den Selben Bit-Positionen wie die verbleibenden freien Bit-Positionen der Zieladresse liegenden Bits der IP-Adresse des NSIS-Knotens zum Auffüllen der Zieladresse lässt sich zuverlässig eine gültige externe IP-Adresse zur Verwendung als Zieladresse für eine REA-Nachricht erzeugen.

Das erfindungsgemäße Verfahren weist gegenüber dem Stand der Technik den Vorteil auf, dass es dem NSIS-Knoten ermöglicht, auch ohne eine ihm bekannte externe IP-Adresse eine externe IP-Adresse zur Verwendung als Zieladresse für die REA-Nachricht zu erzeugen. Durch die Erzeugung einer externen IP-Adresse zur Verwendung als Zieladresse für die REA-Nachricht wird sichergestellt, dass die REA-Nachricht auch tatsächlich das Edge-NAT oder die Edge-Firewall erreicht, um dort einen Port des Edge-NATs oder der Edge-Firewall oder einer Kombination aus beidem zu reservieren, beispielsweise um eine Session oder einer andersartigen Kommunikation von außen, beispielsweise aus dem öffentlichen Internet über das Edge-NAT oder die Edge-Firewall hinweg mit dem NSIS-Knoten initiieren zu können.

Bei der Auswahl der Bits ist es grundsätzlich unerheblich, ob die Bits in zufälliger, nicht oder nicht durchgängig aufeinander folgender Reihenfolge, oder in unmittelbar aufeinander folgender Reihenfolge ausgewählt und anschließend invertiert werden. Wichtig ist, dass jedes invertierte Bit an derjenigen Bit-Position in die Zieladresse eingefügt wird, an der das ursprünglich ausgewählte Bit in der IP-Adresse des NSIS-Knotens stand, um eine gültige IP-Adresse zur Verwendung als Zieladresse in einer REA-Nachricht zu erzeugen.

Vorzugsweise ist das ausgewählte und anschließend invertierte Bit das Bit mit dem höchsten Stellenwert (most significant bit; MSB) der IP-Adresse des NSIS-Knotens.

Wichtig ist hervorzuheben, dass das erfindungsgemäße Verfahren zur Erzeugung einer externen IP-Adresse zur Verwendung als Zieladresse einer REA-Nachricht aufgrund der in IP-Netzwerken verwendeten hierarchischen Adressierung funktioniert. In den meisten Fällen genügt es deshalb, das Bit mit dem höchsten Stellenwert der IP-Adresse des NSIS-Knotens zu invertieren, und die verbleibenden Bits der IP-Adresse des NSIS-Knotens zu belassen, um eine gültige, und damit funktionierende Zieladresse für die REA-Nachricht zu erzeugen. Diese Vorgehensweise funktioniert sogar in Fällen, in denen der NSIS-Knoten noch nicht einmal die zu seinem Subnetz zugehörige Netzwerk-Maske kennt.

Eine vorteilhafte Ausgestaltung der Erfindung sieht vor, dass die verbleibenden Bit-Positionen der Zieladresse anstelle mit den jeweils dieselben Bit-Positionen einnehmenden Bits der IP-Adresse des NSIS-Knotens mit zufällig erzeugten Bits aufgefüllt werden.

Ebenso ist denkbar, die verbleibenden Bit-Positionen der Zieladresse anstelle mit den jeweils die Selben Bit-Positionen einnehmenden Bits der IP-Adresse des NSIS-Knotens aufzufüllen, mit anhand eines vorgegebenen Algorithmus, beispielsweise einer Funktion und/oder einem Schema und/oder anhand von Daten, wie etwa einem NSIS-Session-Identifier oder dergleichen erzeugten Bits aufzufüllen.

Das erfindungsgemäße Verfahren löst das eingangs geschilderte Problem auf einfachste Weise. Es ermöglicht NSIS-Knoten auch in solchen Fällen REA-Nachrichten zu senden, in denen dem NSIS-Knoten keine externe IP-Adresse bekannt oder zugänglich ist. Dies ermöglicht Datenströme durch NATs und Firewalls auch in solchen Fällen zu senden, in denen dies nach dem Stand der Technik bislang nicht möglich ist.

Nachfolgend wird die Erfindung anhand der Zeichnungen näher erläutert. Dabei zeigen:
- Fig. 1: eine schematische Darstellung des Weges einer REA-Nachricht mit gültiger externer, und mit ungültiger, beispielsweise interner IP-Adresse als Zieladresse, sowie
- Fig. 2: eine schematische Darstellung des Ablaufs eines erfindungsgemäßen Verfahrens.

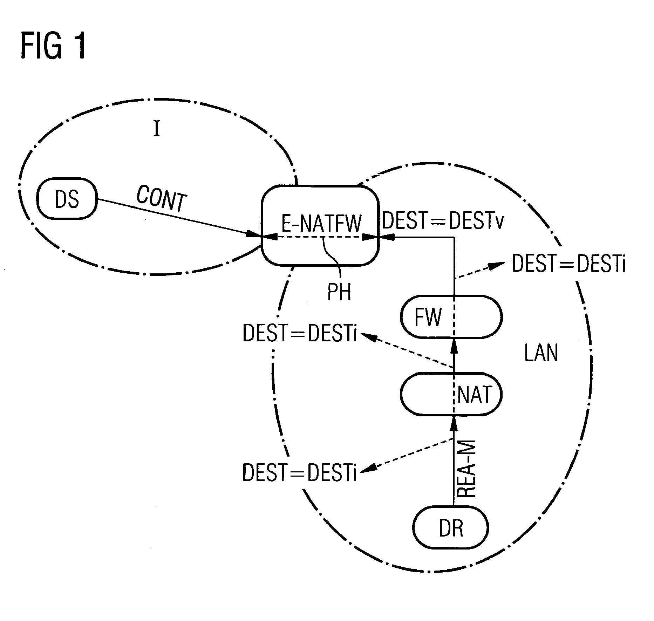

Das NATFW NSLP setzt einen NSIS-Knoten voraus, der eine REA-Nachricht REA-M sendet, um ein NATFW dynamisch derart zu konfigurieren, dass in dem NATFW ein Pinhole PH zum Aufbau eines Kontakts CONT oder einer Kommunikation mit einem außerhalb eines lokalen Netzwerks, beispielsweise im öffentlichen Internet angesiedelten Datensender DS, der auch ein NSIS-Knoten, beispielsweise in einem anderen, lokalen Netzwerk sein kann, entsteht. Fig. 1 zeigt schematisch einen als Datenempfänger arbeitenden NSIS-Knoten DR, der in einem lokalen Netzwerk LAN angesiedelt ist. Ein zweiter NSIS-Knoten DS, der als Datensender arbeitet, ist im öffentlichen Internet I angesiedelt. Das lokale Netzwerk LAN ist verzweigt und verfügt über mehrere interne NATs NAT und Firewalls FW. Das NATFW, welches an der Grenze zwischen lokalem Netzwerk LAN und öffentlichem Internet I liegt ist das Edge-NATFW E-NATFW. Um in dem Edge-NATFW E-NATFW einen als Pinhole PH bezeichneten Zustand zu erzeugen, der eine Kontaktaufnahme CONT vom NSIS-Knoten DS zum NSIS-Knoten DR ermöglicht, muss die Zieladresse DEST der REA-Nachricht REA-M eine gültige externe IP-Adresse DESTv im öffentlichen Internet I sein. Ist die Zieladresse DEST beispielsweise eine gültige oder ungültige interne IP-Adresse DESTi im lokalen Netzwerk LAN, so wird die REA-Nachricht wie in Fig. 1 schematisch dargestellt nicht auf das E-NATFW treffen. Ein Pinhole PH wird in diesem Fall nicht erzeugt mit der Folge, dass keine Kommunikation CONT zwischen den beiden NSIS-Knoten DS und DR stattfinden kann.

Um das Pinhole PH zu erzeugen, muss der NSIS-Knoten DR eine Zieladresse DEST für die REA-Nachricht REA-M derart auswählen, dass sichergestellt ist, dass die REA-Nachricht REA-M das Edge-NATFW E-NATFW erreicht.

Nach dem Stand der Technik ist vorgesehen, eine der folgenden IP-Adressen als Zieladresse DEST zu verwenden:
a) die IP-Adresse des NSIS-Knotens DS, also aus Sicht des hinter der NATFW liegenden NSIS-Knotens DR die IP-Adresse auf der anderen Seite der NSIS-Session.
b) die öffentliche IP-Adresse des die REA-Nachricht erzeugenden NSIS-Knotens DR.
c) die IP-Adresse eines Anwendungs-Servers.

In allen genannten Fällen muss der hinter einer NATFW liegende NSIS-Knoten DR mit einer auch als Instanz bezeichneten, mit dem NSIS-Knoten zusammenwirkenden Funktionseinheit kommunizieren, bevor er die REA-Nachricht REA-M losschickt. Eine solche Instanz existiert aber möglicherweise nicht, oder kann nicht mit dem NSIS-Knoten DR zusammenwirken, beispielsweise mangels Vorbereitung auf die Kontaktaufnahme.

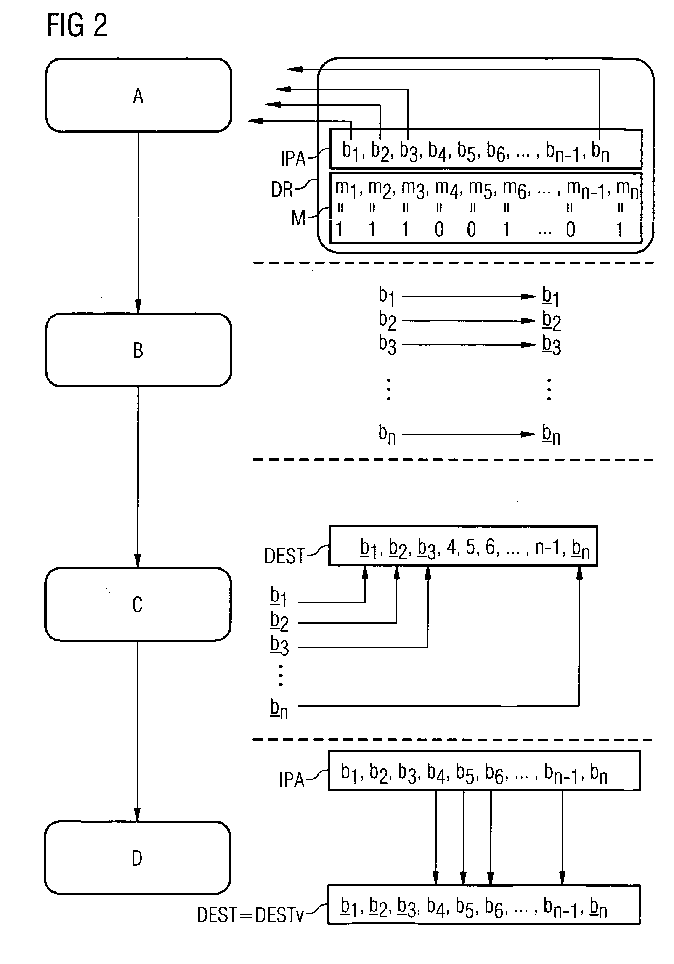

Demgegenüber ist ein in Fig. 2 in seinem Ablauf schematisch dargestelltes erfindungsgemäßes Verfahren in der Lage, eine externe IP-Adresse DESTv zu erzeugen, die als Zieladresse DEST für eine REA-Nachricht REA-M verwendet werden kann. Wesentlicher Gedanke ist dabei, das der NSIS-Knoten DR eine externe IP-Adresse DESTv zur Verwendung als Zieladresse DEST in einer von ihm erzeugten REA-Nachricht REA-M anhand von Informationen erzeugt, die der NSIS-Knoten DR seiner eigenen Netzwerk-Konfiguration entnehmen kann.

Im Speziellen macht der NSIS-Knoten DR nur Gebrauch von seiner eigenen IP-Adresse IPA und, gegebenenfalls, der zum Subnetz des NSIS-Knotens DR zugeordneten Netzwerk-Maske. Hierbei ist anzumerken, dass sich die IP-Adresse des NSIS-Knotens aus einem maskierten und aus einem unmaskierten Teil zusammensetzt.

Das in Fig. 2 dargestellte Verfahren läuft dabei wie folgt ab:
In einem ersten Verfahrensschritt A wird mindestens ein Bit b₁, b₂, b₃, ... , bₙ des maskierten Teils der IP-Adresse IPA des NSIS-Knotens DR ausgewählt. Dabei müssen nicht alle maskierten Bits ausgewählt werden, obgleich auch dieses denkbar wäre. Ebenso ist es nicht erforderlich, dass die ausgewählten Bits aufeinander folgen. Welche Bits b₁, b₂, b₃, ... , bₙ der IP-Adresse IPA maskiert, und welche unmaskiert sind, gibt die Netzwerk-Maske M an. Dabei sind diejenigen Bits b₁, b₂, b₃, ... , bₙ der IP-Adresse IPA maskiert, deren zugehöriger Maskenwert m₁, m₂, m₃, ... , mₙ den binären Wert '1' hat, und diejenigen Bits b₁, b₂, b₃, ... , bₙ der IP-Adresse IPA unmaskiert, deren zugehöriger Maskenwert m₁, m₂, m₃, ... , mₙ den binären Wert '0' hat.

In einem zweiten Verfahrensschritt B werden die ausgewählten Bits b₁, b₂, b₃, ... , bₙ zu b₁, b₂, b₃, ... , bₙ invertiert, d.h. der binäre Wert '1' eines Bits wird zu '0' und umgekehrt.

In einem dritten Verfahrensschritt C werden die invertierten Bits b₁, b₂, b₃, ... , bₙ an denjenigen Bit-Position 1, 2, 3, ... , n in die Zieladresse DEST der REA-Nachricht REA-M des NSIS-Knotens DR eingesetzt, an denen die ursprünglich ausgewählte Bits b₁, b₂, b₃, ... , bₙ in der IP-Adresse IPA des NSIS-Knotens DR standen.

In einem vierten Verfahrensschritt D werden die verbleibenden Bit-Positionen 4, 5, 6, ... , n-1 der Zieladresse DEST der REA-Nachricht REA-M mit den jeweils die Selben Bit-Positionen 4, 5, 6, ... , n-1 einnehmenden Bits b₄, b₅, b₆, ... , bₙ₋₁ der IP-Adresse IPA des NSIS-Knotens DR aufgefüllt.

Es sind mehrere Wege denkbar, um die Bits b₄, b₅, b₆, ... , bₙ₋₁ der verbleibenden Bit-Positionen 4, 5, 6, ... , n-1 in der Zieladresse DEST zu erzeugen.

So ist es beispielsweise möglich, nur das höchstwertige Bit b₁ der IP-Adresse IPA des NSIS-Knotens DR auszuwählen und zu invertieren, und die restlichen Bits aus der IP-Adresse IPA des NSIS-Knotens DR in die Zieladresse DEST zu kopieren.

Ebenso ist denkbar, die verbleibenden Bit-Positionen 4, 5, 6, ... , n-1 der Zieladresse DEST anstelle mit den jeweils die Selben Bit-Positionen 4, 5, 6, ... , n-1 einnehmenden Bits b₄, b₅, b₆, ... , bₙ₋₁ der IP-Adresse IPA des NSIS-Knotens DR mit zufällig erzeugten Bits aufzufüllen.

Genauso können die verbleibenden Bit-Positionen 4, 5, 6, ... , n-1 der Zieladresse DEST anstelle mit den jeweils die Selben Bit-Positionen 4, 5, 6, ... , n-1 einnehmenden Bits b₄, b₅, b₆, ... , bₙ₋₁ der IP-Adresse IPA des NSIS-Knotens DR aufgefüllt zu werden, mit anhand eines vorgegebenen Algorithmus, beispielsweise einer Funktion und/oder einem Schema und/oder anhand von Daten, wie etwa einem NSIS-Session-Identifier oder dergleichen erzeugten Bits aufgefüllt werden.

Wichtig ist hervorzuheben, dass das erfindungsgemäße Verfahren das eingangs geschilderte Problem auf einfachste Weise löst. Es ermöglicht NSIS-Knoten auch in solchen Fällen REA-Nachrichten zu senden, in denen dem NSIS-Knoten keine öffentliche IP-Adresse bekannt oder zugänglich ist. Dies ermöglicht Datenströme durch NATs und/oder Firewalls auch in solchen Fällen zu senden, in denen dies nach dem Stand der Technik bislang nicht möglich ist.

Die Erfindung ist insbesondere im Bereich der Herstellung und dem Vertrieb von Netzwerken sowie von Netzwerkkomponenten gewerblich anwendbar.

## Patentansprüche

1. Verfahren zur Erzeugung einer externen Internet-Protokoll (IP) -Adresse (DESTV) zur Verwendung als Zieladresse (DEST) einer Reserve-External-Address (REA) -Nachricht (REA-M) eines hinter einem mittels Network Address Translator/Firewall (NATFW) Next-Steps-In-Signaling (NSIS) Signaling Layer Protocol (NATFW NSLP) konfigurierbaren NATFW liegenden NSIS-Knotens (DR),
**gekennzeichnet durch** die Verfahrensschritte:
- Auswahl mindestens eines Bits (b₁, b₂, b₃, ... , bₙ) aus dem maskierten Teil der IP-Adresse (IPA) des NSIS-Knotens (DR),
- Invertieren des ausgewählten Bits (b₁, b₂, b₃, ... , bₙ),
- Einfügen des invertierten Bits (b₁, b₂, b₃, ... , bₙ) an derjenigen Bit-Position (1, 2, 3, ... , n) in die Zieladresse (DEST), an der das ursprünglich ausgewählte Bit (b₁, b₂, b₃, ... , bₙ) in der IP-Adresse (IPA) des NSIS-Knotens (DR) stand,
- Auffüllen der verbleibenden Bit-Positionen (4, 5, 6, ... , n-1) der Zieladresse (DEST) mit den jeweils die Selben Bit-Positionen (4, 5, 6, ... n-1) einnehmenden Bits (b₄, b₅, b₆, ... , bₙ₋₁) der IP-Adresse (IPA) des NSIS-Knotens (DR).

2. Verfahren nach Anspruch 1,
**dadurch gekennzeichnet,**
**dass** mehrere Bits (b₁, b₂, b₃, ... , bₙ) in zufälliger Reihenfolge ausgewählt und anschließend invertiert werden, wobei jedes invertierte Bit (b₁, b₂, b₃, ... , bₙ) an derjenigen Bit-Position (1, 2, 3, ... , n) in die Zieladresse (DEST) eingefügt wird, an der das ursprünglich zufällig ausgewählte Bit (b₁, b₂, b₃, ... , bₙ) in der IP-Adresse (IPA) des NSIS-Knotens (DR) stand, um eine gültige IP-Adresse (DESTv) zu erzeugen.

3. Verfahren nach Anspruch 1,
**dadurch gekennzeichnet,**
**dass** mehrere Bits (b₁, b₂, b₃) in aufeinander folgender Reihenfolge ausgewählt und anschließend invertiert werden, wobei jedes invertierte Bit (b₁, b₂, b₃) an derjenigen Bit-Position (1, 2, 3) in die Zieladresse (DEST) eingefügt wird, an der das ursprünglich ausgewählte Bit (b₁, b₂, b₃) in der IP-Adresse (IPA) des NSIS-Knotens (DR) stand, um eine gültige IP-Adresse (DESTv) zu erzeugen.

4. Verfahren nach Anspruch 1,
**dadurch gekennzeichnet,**
**dass** das ausgewählte (b₁) und anschließend invertierte Bit (b₁) das Bit mit dem höchsten Stellenwert der IP-Adresse (IPA) des NSIS-Knotens (DR) ist.

5. Verfahren nach einem der vorhergehenden Ansprüche,
**dadurch gekennzeichnet,**
**dass** die verbleibenden Bit-Positionen (4, 5, 6, ... n-1) der Zieladresse (DEST) mit zufällig erzeugten Bits anstelle mit den jeweils die Selben Bit-Positionen (4, 5, 6, ... , n-1) einnehmenden Bits (b₄, b₅, b₆, ... , bₙ₋₁) der IP-Adresse (IPA) des NSIS-Knotens (DR) aufgefüllt werden.

6. Verfahren nach einem Ansprüche 1 bis 4,
**dadurch gekennzeichnet,**
**dass** die verbleibenden Bit-Positionen (4, 5, 6, ... n-1) der Zieladresse (DEST) mit anhand eines vorgegebenen Algorithmus erzeugten Bits anstelle mit den jeweils die Selben Bit-Positionen (4, 5, 6, ... , n-1) einnehmenden Bits (b₄, b₅, b₆, ... , bₙ₋₁) der IP-Adresse (IPA) des NSIS-Knotens (DR) aufgefüllt werden.
